# EUROPÄISCHE PATENTSCHRIFT

(11) **EP 0 622 288 B1**
(45) Veröffentlichungstag und Bekanntmachung des Hinweises auf die Patenterteilung: **12.11.1997**
(21) Anmeldenummer: 94106779.5
(22) Anmeldetag: 29.04.1994
(51) Int. Cl.: B61D 47/00, B60P 1/64

(54) **Umsetzeinrichtung zum Umsetzen von Wechselbehältern**
Equipment for transferring containers
Dispositif de transfert de conteneurs

(30) Priorität: 30.04.1993 DE 4314373
(43) Veröffentlichungstag der Anmeldung: 02.11.1994
(73) Patentinhaber: Bermüller, Wolfgang, D-81927 München (DE)
(72) Erfinder: Bermüller, Wolfgang, D-81927 München (DE)
(74) Vertreter: Säger, Manfred, Dipl.-Ing.

(56) Entgegenhaltungen:
- CH-A- 629 446
- DE-C- 1 225 559
- US-A- 3 357 582

## Beschreibung

Die vorliegende Erfindung betrifft eine Umsetzeinrichtung zum Umsetzen von nicht selbstrollenden Wechselbehältern gemäß dem Oberbegriff des Patentanspruchs 1 und die Verwendung von Wechselbehältern beim Umsetzen zwischen Fahrzeugen und/oder Lagerstationen gemäß dem Oberbegriff des Anspruches 2.

Verfahren und Vorrichtungen zum automatischen Umsetzen von großen Behältern, wie Containern quer zur Längsachse von einer ersten Fahrzeugplattform auf eine zweite sind bekannt (DE-38 33 942 A1). Dabei wird zum schnellen Umsatteln der Container vorgeschlagen, die Fahrzeugplattenformen vor dem Umsetzen zu einer starren ebenen Plattform kraftschlüssig zu verbinden und die an ihrer Unterseite quer zur Längsachse verlaufende, als Kufen ausgebildete Gleitflächen aufweisende Behälter entlang entsprechenden Gleitflächen der Fahrzeugplattformen zu bewegen. Dabei werden die Container vorzugsweise mittels einer an ihr befestigten Zahnstange über an der Fahrzeugplattform befestigte Zahnritzel bewegt.

Dieses bekannte Verfahren bzw. diese bekannte Vorrichtung haben den Nachteil, daß sich die Fahrzeuge zum Umsetzen unmittelbar nebeneinander befinden müssen und daß eine starre Verbindung zwischen den beiden Fahrzeugen geschaffen werden muß Dies ist umständlich und zeitraubend.

Eine Vorrichtung gemäß dem Oberbegriff des Anspruches 1 ist bekannt (US-A-3 357 582). Sie verwendet keine Rollenketten und Scherenheber.

Aufgabe der vorliegenden Erfindung ist es, eine Vorrichtung zu schaffen bzw. deren Verwendung vorzusehen, anhand denen das Umsetzen von Wechselbehältern wesentlich vereinfacht werden kann.

Gelöst wird diese Aufgabe mit einer Vorrichtung gemäß dem Oberbegriff des Vorrichtungshauptanspruchs und einer Verwendung gemäß dem Oberbegriff des Verwendungshauptanspruchs durch die kennzeichnenden Teile der jeweiligen Ansprüche. Die jeweiligen Unteransprüche geben dabei bevorzugte Ausgestaltungen der Erfindung wieder.

Die Vorrichtung eignet sich insbesondere für nicht Selbstrollende Wechselbehälter, die an ihrer Unterseite keinerlei Rollhilfen aufweisen. Um sie quer zur Längsachse des Wechselbehälters beispielsweise zwischen zwei Fahrzeugen oder zwischen einer Lagerstation und eirem Fahrzeug zu verschieben, ist eine Umsetzvorrichtung vorgesehen, die sich in Längserstreckung aus einer Ruhelage in eine Ausgangs-Betriebslage bringen läßt. Dabei wird die Umsetzvorrichtung zumindest teilweise unter den umzusetzenden Wechselbehälter geschoben. Der Wechselbehälter muß zu diesem Zweck Öffnungen aufweisen, in die Teile der Umsetzvorrichtung einführbar sind.

Die erfindungsgemäße Vorrichtung eignet sich insbesondere im Rahmen eines im Anspruch 2 angegebenen Verfahrens zur Verwendung eines Wechselbehälters beim Umsetzen zwischen Fahrzeugen und/oder Lagerstationen, wobei der Wechselbehälter an seiner Unterseite fest angebrachte, nach unten offene Öffnungen aufweist, in die die Wechselbehälter-Vorschubelemente der Umsetzeinrichtung eingreifen können. Als solche nach unten offene Öffnungen eigen sich vorzugsweise nach unten offene U-Schienen, die sich in der Verschieberichtung erstrecken.

Die Erfindung wird nachfolgend anhand der Figurenbeschreibung beispielhaft näher erläutert. Hierin zeigt
- Figur 1A-C: eine Umsetzeinrichtung mit Rollenkette; und
- Figuren 2 - 5: den Umsetzvorgang unter Verwendung der Umsetzeinrichtung der Fig. 1A-C.

Neben dem Eisenbahnwaggon parallel zu dessen Längsachse befindet sich ein LKW-Fahrgestell 3 mit der erfindungsgemäßen Umsetzeinrichtung 10.

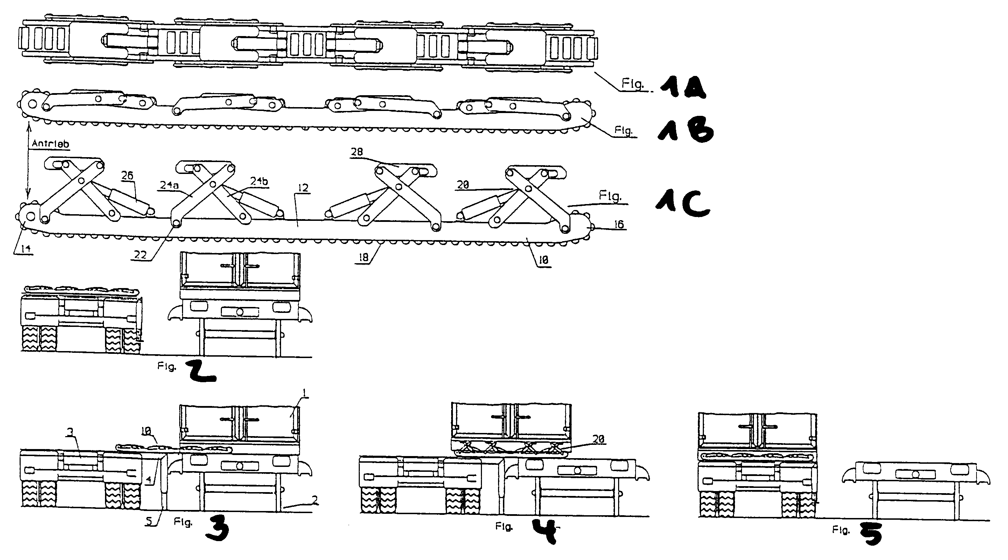

Eine Ausführungsform der Umsetzeinrichtung ist in den Figs. 1 bis 4 beschrieben. Die Umsetzvorrichtung 10 besteht aus einem starren Rahmen 12, um den über eine Antriebsrolle 14 und eine Führungsrolle 16 eine Rollenkette 18 umläuft.

An dem Rahmen sind über Anlenkpunkte 22 Scheren 24a, 24b angelenkt, die über einen hydraulischen oder pneumatischen Zylinder 26 betätigt werden. Die Scheren tragen eine Plattform 28, die mit dem Wechselbehälter bzw. mit den nach unten offenen Öffnungen 40 das Wechselbehälters in Eingriff treten können.

Der Umsetzvorgang des Wechselbehälters 1 vom Eisenbahnwaggon 2 auf das LKW-Gestell 3 ist in den Fig. 2 bis 4 dargestellt.

Vom LKW-Gestell 3 werden zunächst Stützschienen 4 mit Stützbeinen 5 seitlich ausgefahren, so daß eine Ebene zwischen LKW und Waggon besteht (Fig. 2). Anschließend wird über eine Höhenregulierung, beispielsweise die im LKW eingebaute Luftfederung, ein durchgehendes Höhenniveau zwischen dem LKW-Rahmen und der Ladefläche des Eisenbahnwaggons hergestellt. Auch die Stützschiene wird über einen Hydraulikzylinder im Stützbein 4 auf dieses Niveau eingestellt. Anschließend wird die Umsetzeinrichtung 10, die sich auf dem LKW-Gestell 3 befindet, in einer Verschieberichtung zum Eisenbahnwaggon 2 in Bewegung gesetzt und fährt unter den Wechselbehälter 1 bzw. in dessen Öffnungen 40. Befindet sich die Umsetzvorrichtung 10 unterhalb des Wechselbehälters 1, so werden die Hubvorrichtungen 20 in Gang gesetzt, der Wechselbehälter 1 angehoben, bis er aus den im Eisenbahnwaggon 2 eingelassenen Verriegelungen herausgehoben wird. Vermittels der Umsetzvorrichtung 10 wird dann der angehobene Wechselbehälter 1 zum LKW-Gestell 3 überführt und dort durch Absenken der Hubvorrichtung 20 auf das LKW-Gestell und die dort befindlichen Verriegelungszapfen abgesenkt. Das Stützbein 5 wird wider eingefahren und der Umladevorgang ist, wie in Fig. 4 gezeigt, abgeschlossen.

Das Überführen eines Wechselbehälters von einem LKW auf einen Eisenbahnwaggon erfolgt in umgekehrter Reihenfolge.

## Patentansprüche

1. Umsetzeinrichtung zum Umsetzen von nicht selbstrollenden Wechselbehältern zwischen Fahrzeugen und/oder Lagerstationen mit einer Verschieberichtung quer zur Längsachse des Wechselbehälters,
mit Umsetzvorrichtungen (10), die aus einer Ruhelage (R) in eine Ausgangs-Betriebslage (B) verfahrbar sind,
an den Umsetzvorrichtungen (10) Hubvorrichtungen (20) senkrecht zur Verschieberichtung betätigbar sind,
wobei in der Ausgangs-Betriebslage (B) bei betätigten Hubvorrichtungen Wechselbehälter-Vorschubelemente (30) an den Umsetzvorrichtungen (10) betätigt werden, die aufgrund rollender oder gleitender Reibung parallel zur Verschieberichtung (V) einen Vorschub in Verschieberichtung erzeugen und die Umsetzvorrichtung (10) in eine Endbetriebslage überführen, und
die Hubvorrichtungen (20) in der Endbetriebslage absenkbar sind, dadurch gekennzeichnet, daß die Umsetzvorrichtung (10) um mindestens jeweils zwei an einem starren Rollrahmen angeordneten Rollen (14, 16) umlaufende Rollenketten als Wechselbehälter-Vorschubelemente (30) aufweist,
und die Hubvorrichtungen (20) an dem Rollrahmen befestigt sind sind, und die Hubvorrichtungen (20) aus mindestens zwei Scherenhebern bestehen, die symmetrisch auf dem Rahmen angeordnet sind.

2. Verwendung eines Wechselbehälters beim Umsetzen zwischen Fahrzeugen und/oder Lagerstationen zusammen mit einer Umsetzeinrichtung nach Anspruch 1, dadurch gekennzeichnet, daß der Wechselbehälter an seiner Unterseite fest angebrachte nach unten offene Öffnungen aufweist, die sich in der Verschieberichtung erstrecken, in denen die Vorschubelemente oder die Hubelemente eingreifen.

3. Verwendung nach Anspruch 2, dadurch gekennzeichnet, daß der Wechselbehälter als nach unten offene Öffnungen nach unten offene U-Schienen aufweist.

## Claims

1. A transfer apparatus for transferring interchangeable containers which are not self-rolling between vehicles and/or storage stations with a direction of displacement transversely to the longitudinal axis of the interchangeable container,
comprising transfer devices (10) which are movable from a rest position (R) into a starting operative position (B),
on the transfer devices (10) lift devices (20) are actuable perpendicularly to the direction of displacement,
wherein in the starting operative position (B) with lift devices actuated interchangeable container advance elements (30) on the transfer devices (10) are actuated, which by virtue of rolling or sliding friction in parallel relationship to the direction of displacement (V) produce an advance movement in the direction of displacement and transpose the transfer device (10) into a final operative position, and
the lift devices (20) can be lowered in the final operative position, characterised in that the transfer device (10) has as interchangeable container advance elements (30) roller chains which circulate around at least two respective rollers (14, 16) arranged on a rigid roll frame,
and the lift devices (20) are fixed to the roll frame and the lift devices (20) comprise at least two scissor-type lifters which are arranged symmetrically on the frame.

2. Use of an interchangeable container upon transfer between vehicles and/or storage stations together with a transfer apparatus according to claim 1 characterised in that the interchangeable container has downwardly open openings which are fixedly disposed at its underside and which extend in the direction of displacement and in which the advance elements or the lift elements engage.

3. Use according to claim 2 characterised in that the interchangeable container has downwardly open U-shaped rails as downwardly open openings.

## Revendications

1. Dispositif de transbordement pour transborder des conteneurs non roulants entre des véhicules et/ou des stations de stockage, dans une direction de déplacement transversale à l'axe longitudinal dudit conteneur, comportant des dispositifs de transbordement (10) qui sont transférables entre une position de repos (R) et une opération opérationnelle initiale (B), et sur ces dispositifs de transbordement (10), des dispositifs de levage (20) sont manoeuvrables perpendiculairement à la direction du déplacement, tandis que, lorsque les dispositifs de levage ont été actionnés, dans la position opérationnelle initiale (B), sont actionnés des éléments d'avancement (30) du conteneur présents sur les dispositifs de transbordement (10), lesquels éléments en raison du frottement roulant ou glissant génèrent parallèlement à la direction du déplacement (V) un avancement dans cette direction, et transfèrent le dispositif de transbordement (10) vers une position opérationnelle terminale, et dans cette position opérationnelle terminale, les dispositifs de levage (20) peuvent être abaissés, caractérisé en ce que le dispositif de transbordement (10) présente, pour servir d'éléments d'avancement (30), au moins deux chaînes à rouleaux tournantes respectivement autour de deux poulies (14, 16) disposées sur un châssis rigide, et en ce que les dispositifs de levage (20) sont fixés sur ce châssis, et lesdits dispositifs de levage (20) sont constitués d'au moins crics à parallélogramme croisés, qui sont disposés symétriquement sur le châssis.

2. Utilisation d'un conteneur lors du transbordement entre des véhicules et/ou des stations de stockage, conjointement à un dispositif de transbordement conforme à la revendication 1, caractérisée en ce que le conteneur présente, sur sa face inférieure, des orifices fixes, ouverts vers le bas, qui s'étendent dans la direction du déplacement, et dans lesquels pénètrent les éléments d'avancement ou les éléments de levage.

3. Utilisation conforme à la revendication 2, caractérisée en ce que le conteneur présente, pour servir d'orifices ouverts vers le bas, des rails en forme de U ouvert vers le bas.
